# EUROPÄISCHE PATENTSCHRIFT

(11) **EP 1 977 926 B1**
(45) Veröffentlichungstag und Bekanntmachung des Hinweises auf die Patenterteilung: **12.10.2011**
(21) Anmeldenummer: 08101893.9
(22) Anmeldetag: 22.02.2008
(51) Int. Cl.: B60K 35/00, B60K 37/06

(54) **Bedieneinheit und Bedienverfahren**
Control unit and control method
Unité et procédé de commande

(30) Priorität: 02.04.2007 DE 102007015878
(43) Veröffentlichungstag der Anmeldung: 08.10.2008
(73) Patentinhaber: Robert Bosch GmbH, 70442 Stuttgart (DE)
(72) Erfinder: Barkowski, Andre, 38271 Baddeckenstedt (DE); Vollmer, Vasco, 31162 Bad Salzdetfurth (DE); Kersken, Ulrich, 31199 Diekholzen (DE); Meister, Dietmar, 31141 Hildesheim (DE)

(56) Entgegenhaltungen:
- WO-A1-2004/081777
- DE-A1-102005 035 111
- JP-A- 2005 071 286

## Beschreibung

### Stand der Technik

Die Erfindung geht aus von einer Bedieneinheit und einem Bedienverfahren nach Gattung der unabhängigen Ansprüche. Aus der JP 2005-071286 ist bereits eine Anzeigeeinrichtung bekannt, die mit einer berührungsempfindlichen Bedienoberfläche ausgestattet ist. Die Anzeige ist dabei so ausgeführt, dass sie einem ersten Betrachter und einem zweiten Betrachter jeweils ein unterschiedliches Anzeigebild zeigt. In der Anzeige sind Bedienfunktionen darstellbar, wobei über eine Berührung der Anzeige in einem Bereich eines Fensters einer dargestellten Bedienfunktion die angezeigte Funktion ausgelöst wird. Um eine Nutzung der Bedienoberfläche durch beide Betrachter aus verschiedenen Betrachterrichtungen zu erreichen, wird vorgeschlagen, dass sich die Flächen in der Anzeige für die Funktionen nicht überdecken, die den beiden Betrachtern jeweils in den unterschiedlichen Anzeigebildern dargestellt werden. Wird die Anzeigefläche nun berührt, kann durch die räumliche Trennung der Funktionen für den ersten und den zweiten Betrachter eindeutig ermittelt werden, ob eine Funktion in dem ersten oder in dem zweiten Anzeigebild ausgewählt wird.

Aus der WO 2004/081777 A1 ist eine Anzeigeeinrichtung bekannt, die dazu ausgelegt ist, aus zwei verschiedenen Blickrichtungen unterschiedliche Bilder darzustellen. Ferner ist eine Eingabeeinrichtung derart vorgesehen, dass eine Berührung der Anzeigeeinrichtung mit einer Hand eines Nutzers erfasst wird. Dabei wird nicht nur die Position der Hand gegenüber der Anzeigefläche erfasst, sondern es wird auch erfasst, ob der Betrachter die Anzeige von einem Standpunkt in Bezug auf die erste Blickrichtung oder die zweite Blickrichtung bedient. In Abhängigkeit von dieser Erfassung wird eine der ersten Blickrichtung zugeordnete Anwendung oder eine der zweiten Blickrichtung zugeordnete Anwendung in Abhängigkeit von der Berührung der Anzeigefläche gestartet.

### Offenbarung der Erfindung

### Vorteile der Erfindung

Die erfindungsgemäße Bedieneinheit mit den Merkmalen des unabhängigen Anspruchs hat demgegenüber den Vorteil, dass eine Richtung ermittelt wird, aus der eine Bedieneinrichtung bedient wird, die einer Anzeige zugeordnet ist, die für verschiedene Betrachter aus verschiedenen Bedienrichtungen jeweils unterschiedliche Bilder bietet. Hierdurch können Fehlbedienungen vermieden werden. So kann beispielsweise eine Fehlbedienung im Falle einer zufälligen Berührung der Anzeigefläche dann ausgeschlossen werden, wenn ein erster Betrachter beispielsweise eine Touch-Screen-Anzeige in einem Bereich berührt, in dem nur einem zweiten Betrachter eine Funktion zur Auswahl angeboten wird. Denn durch die zusätzliche Bestimmung der Richtung, aus der die Bedienung stattfindet, kann in diesem Fall eine versehentliche, fehlerhafte Bedienung identifiziert werden, da keine aus der Bedienungsrichtung sichtbare Funktion aufgerufen wurde. Wird eine Berührung eines Feldes erfasst, kann entsprechend überprüft werden, ob eine Bedienung aus einer Richtung erfolgt ist, aus der das berührte Feld sichtbar war. Somit kann über die Auswertung der Bedienrichtung die Sicherheit für eine korrekte Bedienung erhöht werden.

Vorteilhaft ist es hierbei, dass sich bei wenigstens einer Funktion in beiden Anzeigebildern die Flächen für eine Bedienung in der Anzeige überlappen. Eine Identifikation erfolgt dann aus der Bedienung im Zusammenhang mit einer Erfassung der jeweiligen Richtung, aus der die Bedienung durchgeführt wird. Damit ist es auch möglich, jeweils über die Hälfte oder sogar das gesamte Anzeigebild für die Darstellung von auswählbaren Funktionen zu nutzen, da eine Identifikation einer ausgewählten Funktion nicht mehr über eine alleinige Zuordnung zu einer Position in der Anzeigefläche erfolgt, sondern indem zusätzlich die Richtung, aus der eine Bedienung erfolgt, mit berücksichtigt wird.

Durch die in den abhängigen Ansprüchen aufgeführten Maßnahmen sind vorteilhafte Weiterbildungen und Verbesserungen der in dem unabhängigen Anspruch angegebenen Bedieneinheit möglich.

Vorteilhaft ist es, die Bedieneinrichtung als eine Touch-Screen-Oberfläche der Anzeige auszuführen, da es hierdurch besonders einfach möglich ist, mit einer Anzeige, in der aus verschiedenen Betrachterrichtungen verschiedene Anzeigebilder sichtbar sind, auch verschiedene Funktionen für die jeweiligen Betrachter darzustellen.

Es ist ferner vorteilhaft, ergänzend oder alternativ benachbart zu der Anzeige Bedieneinrichtungen anzuordnen, die jeweils in der Anzeige dargestellten Funktionen zugeordnet sind.

Ferner ist eine einfache Bedienung, insbesondere während einer Fahrt eines Fahrzeugs, mit einer Spracheingabeeinrichtung möglich, bei der ebenfalls richtungsabhängig der Spracheingabe Funktionen, die in der Anzeige dargestellt werden, zugeordnet werden.

Es ist ferner vorteilhaft, für die Ermittlungseinrichtung eine richtungsselektive Abstandsmessung durchzuführen, da hierdurch besonders genau erfasst werden kann, aus welcher Richtung eine Bedienung erfolgt. So kann beispielsweise über die Abstandsmessung die Annäherung einer Hand bzw. eines Armes an die Bedieneinrichtung erfasst werden. Hierbei ist es möglich, die Richtung zu erfassen, aus der sich die Hand bzw. der Arm an die Bedieneinrichtung annähert, indem die Abstandsmessung über die Zeit verfolgt wird.

Es ist ferner vorteilhaft, eine Änderung einer Sitzposition eines Benutzers zu erfassen, um eine Bedienrichtung zu ermitteln, da hierdurch insbesondere im Fahrzeug vorhandene Einrichtungen mit verwendet werden können, wie beispielsweise eine Gurteinstellung oder eine Sitzmatte im Fahrersitz für ein Airbag-System, um die Bedienrichtung zu erfassen.

Entsprechende Vorteile ergeben sich für ein erfindungsgemäßes Bedienverfahren mit den Merkmalen des nebengeordneten Anspruchs.

### Kurze Beschreibung der Zeichnungen

Ausführungsbeispiele der Erfindung sind in den Zeichnungen dargestellt und in der nachfolgenden Beschreibung näher erläutert. Es zeigen:
- Figur 1: eine Aufsicht auf eine erfindungsgemäße Bedieneinheit in einem Kraftfahrzeug,
- Figuren 2 und 3: zwei Anzeigebilder aus verschiedenen Betrachterrichtungen zur Durchführung des erfindungsgemäßen Bedienverfahrens in einem ersten Ausführungsbeispiel,
- Figur 4: eine Anzeige und eine Bedieneinrichtung zur Durchführung des erfindungsgemäßen Bedienverfahrens gemäß einem zweiten Ausführungsbeispiel.

### Ausführungsformen der Erfindung

Die erfindungsgemäße Bedieneinheit kann für beliebige elektronische Geräte verwendet werden. Sie ist jedoch insbesondere vorteilhaft für Fahrzeuge verwendbar, da bei Fahrzeugen, insbesondere bei Kraftfahrzeugen, eine Bedienung von Fahrzeugfunktionen sowohl durch den Fahrer, aber in einem gewissen Umfang auch durch den Beifahrer erfolgen soll. So ist es beispielsweise für den Beifahrer ebenfalls von Interesse, sich über eine Fahrtroute zu informieren oder eine Klimaregelung für sich einzustellen.

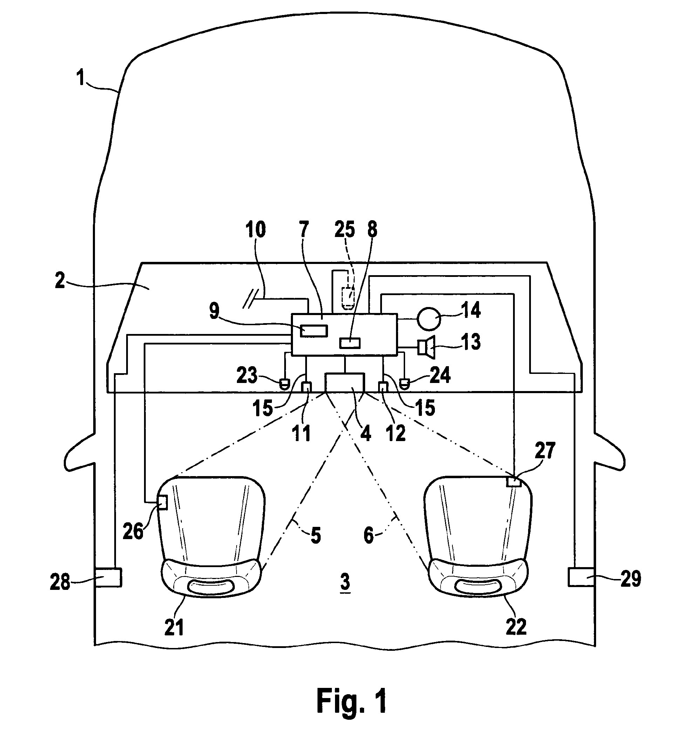

In der Figur 1 ist schematisch ein Ausschnitt aus einem Kraftfahrzeug 1 mit einer Instrumententafel 2 und einem Ausschnitt aus einem Fahrzeuginnenraum 3 dargestellt. In der Instrumententafel 2 ist eine Anzeigeeinheit 4 dargestellt, die in einem ersten, strichpunktmäßig dargestellten Blickwinkelbereich 5 ein erstes Anzeigebild und in einem zweiten strich-zwei-punkt-mäßig dargestellten Blickwinkelbereich 6 ein zweites Anzeigebild darstellen kann. Die beiden Anzeigebilder können gleich sein, können sich aber auch unterscheiden. Eine solche sogenannte Dual-View-Anzeige kann auf verschiedene Weise realisiert werden. So ist es beispielsweise möglich, eine Flüssigkristallanzeige zu verwenden, bei der eine Auflage so vorgesehen ist, dass bestimmte Bereiche der Pixel jeweils entweder nur aus der ersten oder nur aus der zweiten Richtung sichtbar sind, wobei diese entsprechenden Pixel unabhängig voneinander ansteuerbar sind. Es ist in anderen Ausführungsformen auch möglich, einzelne Bildpunkte zu verwenden, die unterschiedliche Blickwinkel aufgrund ihrer Flüssigkristallstruktur aufweisen und somit nur in einem gewissen Blickwinkelbereich erkennbar sind. In einer weiteren Ausführungsform kann auch eine richtungsselektive Beleuchtung mit entsprechenden Lichtleiterelementen vorgesehen sein, die das Licht in die jeweilige Richtung lenkt und die mit wechselseitigem Blickwinkel betrieben wird, wobei eine Bilddarstellung jeweils an den Blickwinkelbereich der Beleuchtung angepasst wird.

Die Anzeigeeinheit 4 wird von einer Steuereinheit 7 angesteuert, die einen Grafikcontroller 8 zu einer entsprechenden Steuerung der Bilddarstellung in der Anzeigeeinheit 4 aufweist. Eine Bilddarstellung selber wird von einer Recheneinheit 9 bereitgestellt. Die Steuereinheit 7 ist bevorzugt an einen Fahrzeugdatenbus 10 angeschlossen, über den verschiedene Fahrzeugfunktionen im Fahrzeug gesteuert werden können. Ferner können aber auch Informationen von den Fahrzeugsystemen an die Steuereinheit 7 übermittelt und gegebenenfalls in der Anzeigeeinheit 4 dargestellt werden. An den Fahrzeugdatenbus 10 ist beispielsweise eine Klimaeinrichtung, eine Sitzeinstellung, eine Navigationseinrichtung, eine weitere Anzeigeeinheit, eine Lichteinstellung oder eine Radioeinrichtung im Fahrzeug angeschlossen. Ferner können aber auch Funktionen wie eine Navigationsfunktion, eine Radiofunktion oder eine Musikwiedergabe in die Steuereinheit 7 integriert sein. Hierzu ist die Steuereinheit 7 in einer Ausführungsform mit einem Datenträger 14 und/oder mit einer Audioausgabe verbunden, beispielsweise einer Lautsprechereinheit 13 im Fahrzeug. In der Anzeigeeinheit 4 werden Informationen über den Fahrzeugzustand, wie beispielweise eine Außentemperatur oder eine Innentemperatur, sowie eine aktuell vorgenommene Lüftungseinstellung oder eine Navigationskarte mit einer Fahrzeugposition dargestellt. Ferner werden auch Funktionen dargestellt, die über einen Benutzer ausgewählt werden können. In einer ersten Ausführungsform ist die Anzeigeeinheit 4 als eine Touch-Screen-Anzeige ausgeführt, so dass über eine Berührung der Anzeigefläche in einem Bereich eines Fensters ausgewählt werden kann, das einer Funktion zugeordnet ist und in dem die jeweilige Funktion in Textform oder als Symbol angegeben ist. Die Touch-Screen-Funktion wird bevorzugt über eine elektronische Auflage realisiert, die auf eine Flüssigkristallanzeige oder eine andere Matrixanzeige aufgebracht ist. Eine Berührung kann ortsaufgelöst, beispielsweise über eine Detektion mittels einer Vielzahl von transparenten elektrischen Leitungen durch eine Kapazitätsänderung erfasst werden.

Werden für beide Betrachter in den Blickwinkelbereichen 5, 6 gleiche Bilder angezeigt, so kann eine Berührung der Anzeigefläche durch beide Benutzer in gleicher Weise erfolgen. In erfindungsgemäßer Ausführung wird jedoch für den ersten Blickwinkelbereich 5 und den zweiten Blickwinkelbereich 6 jeweils ein unterschiedliches Anzeigebild dargestellt. In einer Ausführungsform ist es auch möglich, dass nur einem der beiden Betrachter ein Anzeigebild dargestellt wird. Gegebenenfalls können sich in einer Ausführungsform die Flächen der Anzeigeoberfläche, die einer jeweiligen Funktion zugeordnet sind und durch deren Berührung die jeweilige dargestellte Funktion ausgelöst wird, auch überschneiden.

Um zu ermitteln, aus welcher Richtung eine entsprechende Berührung der Oberfläche der Anzeigeeinheit 4 erfolgt, weist die Steuereinheit 7 in einer ersten Ausführungsform jeweils eine Schnittstelle 15 zu zwei Abstands-Messelementen 11, 12 auf. Die beiden Abstands-Messelemente 11, 12 sind beispielsweise als Ultraschall-Abstandssensoren ausgeführt, die ein für einen Fahrer unhörbares Ultraschallsignal in den Fahrzeuginnenraum 3 abstrahlen. Aus der Laufzeit eines reflektierten Echos können sie den Abstand zu einem Hindernis vor den Sensoren 11, 12 messen. Berührt nun beispielsweise der Fahrer des Fahrzeugs ausgehend von einem Fahrersitz 21 die Anzeigeeinheit 4, so nähert sich seine Hand dem ersten Abstandssensor 11 an. Der zweite Abstandssensor 12 misst dagegen in diesem Zeitraum kein Hindernis vor dem Sensor 12. Somit kann in diesem Fall eine Annäherung der Hand des Fahrers aus Richtung des Fahrersitzes 21 an die Anzeigeeinheit 4 erkannt werden. Damit ist es möglich, eine im Nachfolgenden erfolgte Bedienung der Touch-Screen-Oberfläche der Anzeigeeinheit 4 durch den Fahrer zu ermitteln. Nähert sich der Beifahrer von dem Beifahrersitz 22 mit seiner Hand an die Anzeigeeinheit 4 an, so wird diese Annäherung durch den zweiten Sensor 12 erfasst. In einer Ausführungsform ist es möglich, dass für den Fall, dass beide Sensoren 11, 12 eine Annäherung einer Hand erfassen, eine Bedienung gesperrt wird, um eine Fehlbedienung zu vermeiden.

In einer anderen Ausführungsform können die Sensoren 11, 12 auch als kapazitive Abstandssensoren ausgeführt sein. Ferner ist es auch möglich, die Sensoren 11, 12 als optische Sensoren auszuführen, die beispielsweise in einem Infrarot-Wellenbereich oder in einem Mikrowellen-Wellenbereich eine Abstandsmessung durchführen, um eine Annäherung einer Hand bzw. eines Arms eines Benutzers zu erfassen.

In einer weiteren Ausführungsform ist es auch möglich, eine Bedienung als eine Spracheingabe auszuführen, wobei mögliche Spracheingaben bzw. mögliche Fahrzeugzustände, zu denen eine Spracheingabe erfolgen kann, in der Anzeigeeinheit 4 dargestellt werden. Zur Durchführung der Spracheingabe weist die Steuereinheit 7 eine Schnittstelle zu einem ersten Mikrofon 23 und zu einem zweiten Mikrofon 24 auf. Die beiden Mikrofone 23, 24 sind so angeordnet, dass aus der Differenz eines empfangenen Sprachsignals erkannt werden kann, ob die Spracheingabe von einem Fahrer von dem Fahrersitz 21 oder von einem Beifahrer von dem Beifahrersitz 22 durchgeführt wird. Hierzu kann beispielsweise der zeitliche Versatz zwischen den beiden von den Mikrofonen 23, 24 empfangenen Schallsignalen ausgewertet werden.

In einer weiteren Ausführungsform ist es auch möglich, den Fahrzeuginnenraum 3 durch eine vorzugsweise am Fahrzeugdach angeordnete Kamera 25 zu überwachen. Um anzudeuten, dass die Kamera am Fahrzeugdach angeordnet ist, ist sie in der Figur 1 gestrichelt dargestellt. Die Kamera ist vorzugsweise als eine Weitwinkelkamera ausgeführt und kann eine Annäherung an eine Bedieneinrichtung durch einen Benutzer, beispielsweise an die Anzeigeeinheit 4, erfassen und an die Steuereinheit 7 melden.

In einer weiteren Ausführungsform kann über einen ersten Sitzbelegungssensor in dem Fahrersitz 21 und einen zweiten Sitzbelegungssensor 27 in dem Beifahrersitz 22 erkannt werden, ob der jeweilige Sitz überhaupt besetzt ist. Ist der Sitz nicht besetzt, so erfolgt in einer ersten Ausführungsform in dem jeweiligen Blickwinkelbereich 5, 6 auch keine Anzeige. Ferner kann über die Sitzbelegungssensoren 26, 27, beispielsweise in Ausprägung einer Sitzmatte in den jeweiligen Sitzen 21, 22, auch eine Gewichtsverlagerung eines möglichen Bedieners erfasst werden. Für den Fall, dass eine Berührung der Anzeigeeinheit 4 oder einer benachbart hierzu vorgesehenen Bedieneinrichtung durchgeführt würde, müsste sich ein jeweiliger Fahrer bzw. Beifahrer in Richtung der Anzeigeeinheit 4 neigen, so dass es zu einer erfassbaren Positionsverlagerung kommt. Eine Bedienrichtung wird dann demjenigen Blickwinkelbereich zugeordnet, bei der eine Gewichtsverlagerung mittels der Sitzbelegungssensoren 26, 27 in der jeweiligen Richtung hinsichtlich der Blickwinkelbereiche 5, 6 festgestellt wird. Ergänzend oder alternativ hierzu können auch Gurterfassungssensoren 28, 29 ausgewertet werden, die eine Bewegung des Gurtes erfassen. Für den Fall, dass eine Bedienung der Anzeigeeinheit 4 erfolgt, muss sich ein Fahrer zumindest geringfügig nach vorne beugen, so dass der Gurt um einen erfassbaren Anteil zusätzlich abgerollt wird.

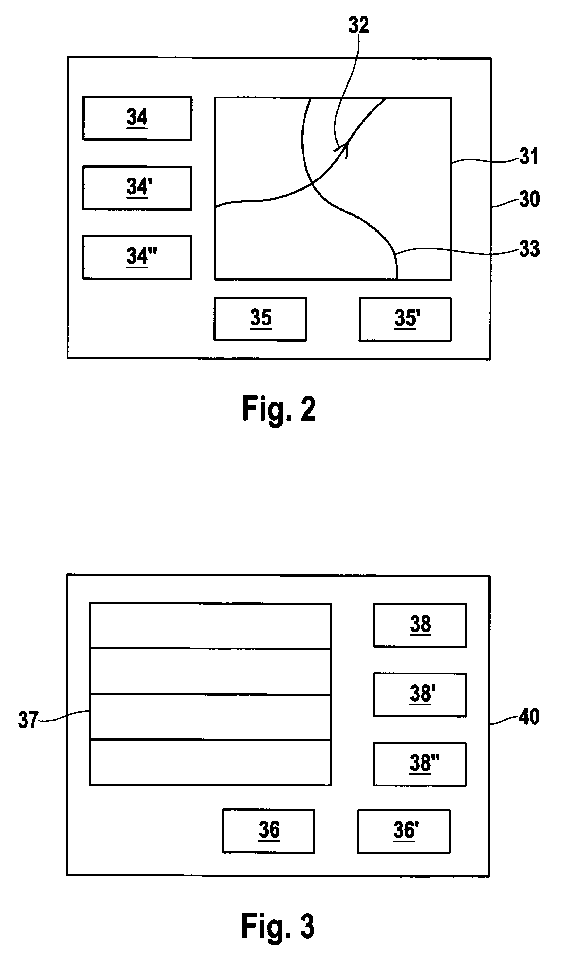

In den Figuren 2 und 3 ist dieselbe Anzeige in den zwei unterschiedlichen Blickwinkelbereichen 5, 6 mit aus den beiden Blickrichtungen sichtbaren, unterschiedlichen Anzeigebildern dargestellt. In der Figur 2 ist ein erstes Anzeigebild 30 dargestellt, dass für den Fahrer in dem Blickwinkelbereich 5 in der Anzeigeeinheit 4 sichtbar ist. Hierbei ist eine Kartendarstellung 31 für eine Fahrzeugnavigation mit einer Fahrzeugposition 32 und eingetragenen Straßen 33 in der Anzeige dargestellt. Links neben der Kartendarstellung 31 sind die ersten Bedienfelder 34, 34', 34" angeordnet. Unter der Kartendarstellung sind Bedienfelder 35, 35' angeordnet. Die ersten Bedienfelder 34, 34', 34" können beispielsweise Funktionen der Fahrzeugnavigation betreffen, wie beispielsweise eine Eingabe eines Fahrziels, ein Laden einer Fahrtroute aus einem Adressbuch oder ein Abbruch der aktuellen Fahrzeugnavigation. Die zweiten Bedienfelder 35, 35' können eine Anzeigeneinstellung betreffen, wie beispielsweise eine Helligkeit der Anzeige oder eine Lautstärke einer akustischen Ausgabe. Zur Identifikation der jeweiligen Funktion sind die Bedienfelder jeweils mit einem Symbol und/oder einem Text beschriftet, um für den Benutzer die ausgelöste Funktion erkennbar zu machen. Eine Bedienung wird so durchgeführt, dass die Bedienoberfläche in der Anzeige eine Berührung der Anzeige in einem der Bereiche 34, 34', 34", 35, 35' in dem Anzeigebild 30 erfasst. Zusätzlich wird über eine Ermittlungseinrichtung, beispielsweise über die Abstandssensoren 11, 12 ermittelt, aus welcher Richtung eine Bedienung erfolgt. Wird ermittelt, dass eine Berührung der Anzeige aus einer Richtung eines Fahrers erfolgt ist, so wird nach der Berührung eines der dargestellten Bedienfelder die dem berührten Bedienfeld zugeordnete Aktion ausgeführt.

In der Figur 3 ist eine Anzeigebild 40 dargestellt, die aus dem zweiten Blickwinkelbereich 6 für einen Beifahrer des Fahrzeugs sichtbar ist. Das Anzeigebild 40 unterscheidet sich in der hier gezeigten Ausführungsform von dem Anzeigebild 30, das in dem ersten Blickwinkelbereich 5 sichtbar ist. An gleicher Stelle der Oberfläche der Anzeige wie in dem Anzeigebild 30 befinden sich in dem Anzeigebild 40 Funktionen 36, 36', mit denen für den Beifahrer zwei Funktionen ausführbar sind, beispielsweise eine Bildeinstellung der Anzeige für den Beifahrer und eine von dem Beifahrer vorgenommene Lautstärkenregelung. In einer Listendarstellung 37 können Funktionen durch den Beifahrer ausgewählt werden. Im hier vorliegenden Beispiel können einzelne Liedtitel von einem Musikdatenträger zur Wiedergabe ausgewählt werden. Eine Funktionssteuerung erfolgt über Funktionstasten 38, 38', 38", die seitlich, vorzugsweise in Richtung des Beifahrers, in dem Anzeigebild 40 dargestellt sind.

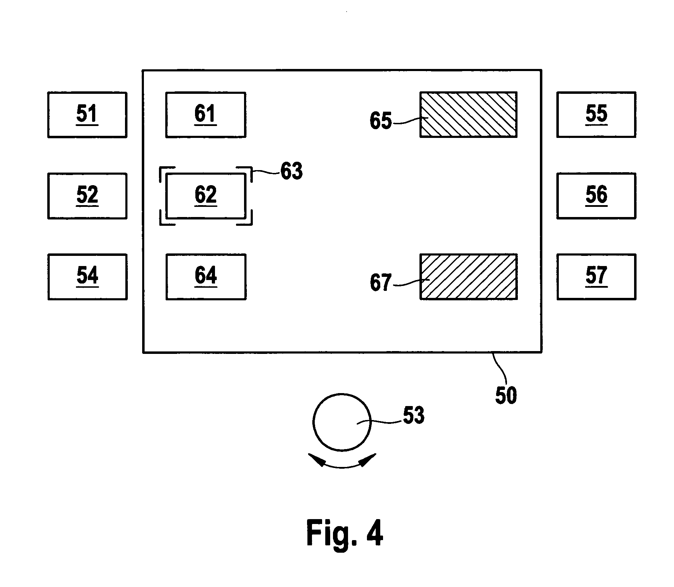

In der Figur 4 ist ein weiteres Ausführungsbeispiel dargestellt, bei dem eine Anzeige 50 als eine Matrixanzeige, nicht jedoch notwendig als eine Touch-Screen-Anzeige ausgeführt ist. Stattdessen sind in einer ersten Ausführungsform Drucktasten 51, 52, 53, 54, 55, 56, 57 benachbart zu der Anzeige 50 dargestellt. Zu den Drucktasten sind jeweils Funktionen in einzelnen Feldern zugeordnet benachbart in einem Anzeigebild der Anzeige 50 dargestellt. Zu den Drucktasten 51, 52, 54 auf der linken Seite der Anzeige 50 ist jeweils eine Funktion 61, 62, 64 in dem Anzeigebild dargestellt. Unabhängig von der Bedienung durch den Fahrer oder den Beifahrer sind den Bedientasten 51, 52 und 54 jeweils gleiche Funktionen 61, 62 und 64 unabhängig von dem jeweiligen Bediener zugeordnet. Der vierten Bedientaste 55 ist jedoch das Bedienfeld 65 zugeordnet, das schraffiert dargestellt ist. Hierdurch soll zum Ausdruck gebracht werden, dass in dem ersten Anzeigebild in dem ersten Blickwinkelbereich 5 und in dem zweiten Blickwinkelbereich 6 jeweils eine unterschiedliche Funktion in dem Bedienfeld 65 angezeigt ist. Abhängig von der Bedienung durch den Fahrer bzw. den Beifahrer erfolgt nun eine unterschiedliche Funktionsauslösung bei einer Bedienung aus einer Richtung des Fahrers und bei einer Bedienung aus einer Richtung des Beifahrers. Der fünften Taste 56 ist kein Bedienfeld zugeordnet. Unabhängig von der Bedienrichtung erfolgt bei der Betätigung der fünften Bedientaste 56 keine Aktion. Der sechsten Bedientaste 57 ist nur in dem ersten Anzeigebild ein ebenfalls schraffiert dargestelltes Bedienfeld 67 zugeordnet. Bedient der Fahrer aus der Bedienrichtung des ersten Blickwinkelbereichs 5 die sechste Taste 57, so erfolgt keine Aktion. Bedient allerdings der Beifahrer die sechste Taste 57, so erfolgt diejenige Aktion, deren Bezeichnung nur für den Beifahrer sichtbar ist.

Ergänzend oder alternativ zu den Bedientasten 51, 52, 54, 55, 56, 57 kann auch ein Dreh-Druckgeber 53 vorgesehen sein. Durch eine Drehbetätigung des Dreh-Druck-Knopfes kann ein Auswahlrahmen 63 in der Anzeige verschoben werden. Durch eine Positionierung des Auswahlrahmens 63 kann hierdurch eine der Funktionen so angewählt werden, dass durch einen Druck auf den Dreh-Druckgeber 53 die jeweilige Funktion ausgewählt wird. Betätigt der Fahrer den Dreh-Druckgeber 53, so wird bei der Auswahl der Funktion des Bedienfeldes 65 die für ihn sichtbare Funktion in dem ersten Blickwinkelbereich 5 ausgelöst. Bedient der Beifahrer den Dreh-Druckgeber 53, so wird die für ihn in dem Anzeigefeld 65 in dem zweiten Blickwinkelbereich 6 sichtbare Funktion bei einer entsprechenden Auswahl durch Drehen und Drücken des Dreh-Druckgebers 53 ausgewählt.

Anstelle des Dreh-Druckgebers 53 können noch andere Bedienelemente, wie beispielsweise Kreuzwippen, einfache Wippschalter oder Sensorfelder, wie beispielsweise ein Touch-Pad, verwendet werden.

## Patentansprüche

1. Bedieneinheit insbesondere für ein Fahrzeug mit einer Anzeigeeinheit (4) zur Darstellung auswählbarer Funktionen (34, 35, 36, 37, 38, 61, 62, 64, 65), wobei die Anzeigeeinheit (4) derart ausgeführt ist, dass in einem ersten Blickwinkelbereich (5) ein erstes Anzeigebild (30) und in einem zweiten Blickwinkelbereich (6) ein zu dem ersten Anzeigebild (30) unterschiedliches zweites Anzeigebild (40) darstellbar sind, wobei sich die beiden Anzeigebilder (30, 40) hinsichtlich wenigstens einer, in dem jeweiligen Anzeigebild dargestellten auswählbaren Funktion unterscheiden, mit wenigstens einer Bedieneinrichtung (4, 51, 52, 53, 54, 55, 57) zur Funktionsauswahl, und mit einer Schnittstelle (15) zu einer Ermittlungseinrichtung zur Ermittlung einer Betrachterrichtung, aus der die wenigstens eine Bedieneinrichtung bedient wird, und zur Zuordnung der erfolgten Bedienung zu einer dargestellten auswählbaren Funktion in demjenigen Anzeigebild, das aus der ermittelten Betrachterrichtung sichtbar ist, **dadurch gekennzeichnet, dass** wenigstes eine in dem ersten Anzeigebild dargestellte Funktion (35) und eine hiervon unterschiedliche, in dem zweiten Anzeigebild dargestellte Funktion (36) in einem wenigstens teilweise überlappenden Bereich einer Oberfläche der Anzeige dargstellt sind.

2. Bedieneinheit nach einem der vorhergehenden Ansprüche, **dadurch gekennzeichnet, dass** die wenigstens eine Bedieneinrichtung eine Touch-Screen Oberfläche der Anzeigeeinheit (4) ist.

3. Bedieneinheit nach einem der vorhergehenden Ansprüche, **dadurch gekennzeichnet, dass** die wenigstens eine Bedieneinrichtung (51, 52, 54, 55, 56, 57) benachbart zu der Anzeige angeordnete Bedienelemente sind.

4. Bedieneinheit nach einem der vorhergehenden Ansprüche, **dadurch gekennzeichnet, dass** die wenigsten eine Bedieneinrichtung als eine Sprachbedieneinrichtung (23, 24) ausgeführt ist.

5. Bedieneinheit nach einem der vorhergehenden Ansprüche, **dadurch gekennzeichnet, dass** die Bedieneinheit mit einer Ermittlungseinrichtung (11, 12) verbunden ist, die eine richtungsselektive Abstandsmessung zu Benutzern der Bedieneinrichtung durchführt.

6. Bedieneinheit nach einem der vorhergehenden Ansprüche, **dadurch gekennzeichnet, dass** die Bedieneinheit mit einer Ermittlungseinrichtung (26, 27, 28, 29) verbunden ist, die eine Änderung der Sitzposition eines Benutzers erfasst.

7. Bedienverfahren für eine elektronische Einrichtung insbesondere in einem Fahrzeug, wobei in einer Anzeige auswählbarer Funktionen derart dargestellt werden, dass in einer ersten Betrachtungsrichtung ein erstes Anzeigebild und in einer zweiten Betrachtungsrichtung ein zu dem ersten Anzeigebild unterschiedliches zweites Anzeigebild dargestellt werden und dass sich die beiden Anzeigebilder in wenigstens einer dargestellten auswählbaren Funktion unterscheiden, wobei zur Auswahl einer der in einem der beiden Anzeigebilder dargestellten Funktionen eine Betätigung einer Bedieneinrichtung und eine Betrachtungsrichtung ermittelt werden, aus der die wenigstens eine Bedieneinrichtung bedient wird, **dadurch gekennzeichnet, dass** wenigstes eine in dem ersten Anzeigebild dargestellte Funktion und eine hiervon unterschiedliche, in dem zweiten Anzeigebild dargestellte Funktion in einem wenigstens teilweise überlappenden Bereich einer Oberfläche der Anzeige dargstellt werden.

## Claims

1. Control unit, in particular for a vehicle having a display unit (4) for displaying selectable functions (34, 35, 36, 37, 38, 61, 62, 64, 65), wherein the display unit (4) is embodied in such a way that in a first viewing angle range (5) a first display unit (30) can be displayed, and in a second viewing angle range (6) a second display image (40), which is different from the first display image (30), can be displayed, wherein the two display images (30, 40) differ at least in terms of a selectable function which is displayed in the respective display image, having at least one control device (4, 51, 52, 53, 54, 55, 57) for selecting functions, and having an interface (15) with a detection device for detecting a viewer direction from which the at least one control device is controlled, and for assigning the control operation which has taken place to a displayed selectable function in that display image which can be viewed from the detected viewer direction, **characterized in that** at least one function (35) which is displayed in the first display image and a function (36) which is different therefrom and is displayed in the second display image are displayed in an at least partially overlapping region of a surface in the display.

2. Control unit according to one of the preceding claims, **characterized in that** the at least one control device is a touch screen surface of the display unit (4).

3. Control unit according to one of the preceding claims, **characterized in that** the at least one control device (51, 52, 54, 55, 56, 57) comprises control elements which are arranged adjacent to the display.

4. Control unit according to one of the preceding claims, **characterized in that** the at least one control device is embodied as a voice-operated control device (23, 24).

5. Control unit according to one of the preceding claims, **characterized in that** the control unit is connected to a detection device (11, 12) which carries out direction-selective distance measurement from users of the control device.

6. Control unit according to one of the preceding claims, **characterized in that** the control unit is connected to a detection device (26, 27, 28, 29) which senses a change in the sitting position of a user.

7. Control method for an electronic device, in particular in a vehicle, wherein functions which can be selected in a display are displayed in such a way that in a first viewing direction a first display image is displayed and in a second viewing direction a second display image which is different from the first display image is displayed, and in that the two display images differ in at least one displayed selectable function, wherein, in order to select one of the functions displayed in one of the two display images, activation of a control device is detected, and a viewing direction from which the at least one control device is operated is detected, **characterized in that** at least one function which is displayed in the first display image and a function which is different therefrom and is displayed in the second display image are displayed in an at least partially overlapping region of a surface of the display.

## Revendications

1. Unité de commande, notamment pour un véhicule équipé d'une unité d'affichage (4) servant à la représentation de fonctions (34, 35, 36, 37, 38, 61, 62, 64, 65) sélectionnables, l'unité d'affichage (4) étant réalisée de telle sorte qu'une première image d'affichage (30) peut être représentée dans un premier angle d'observation (5) et qu'une deuxième image d'affichage (40) différente de la première image d'affichage (30) peut être représentée dans un deuxième angle d'observation (6), les deux images d'affichage (30, 40) se différenciant par rapport à au moins une fonction sélectionnable représentée sur une image d'affichage respective, avec au moins un dispositif de commande (4, 51, 52, 53, 54, 55, 57) servant à la sélection de fonctions, et avec une interface (15) d'un dispositif de calcul servant à calculer une direction d'observation et à partir de laquelle l'au moins un dispositif de commande est commandé, et à apparier la commande passée à une fonction sélectionnable représentée dans ladite image d'affichage visible depuis la direction d'observation calculée, **caractérisée en ce qu'**au moins une fonction (35) représentée sur la première image d'affichage et une fonction (36) différente représentée sur la deuxième image d'affichage sont représentées dans une zone se chevauchant au moins en partie d'une surface de l'affichage.

2. Unité de commande selon l'une quelconque des revendications précédentes, **caractérisée en ce que** l'au moins un dispositif de commande est une surface à écran tactile de l'unité d'affichage (4).

3. Unité de commande selon l'une quelconque des revendications précédentes, **caractérisée en ce que** l'au moins un dispositif de commande (51, 52, 54, 55, 56, 57) correspond à des éléments de commande placés à côté de l'affichage.

4. Unité de commande selon l'une quelconque des revendications précédentes, **caractérisée en ce que** l'au moins un dispositif de commande prend la forme d'un dispositif à commande vocale (23, 24).

5. Unité de commande selon l'une quelconque des revendications précédentes, **caractérisée en ce que** l'unité de commande est reliée à un dispositif de calcul (11, 12) qui réalise une mesure de distance dépendant de la direction par rapport à l'utilisateur du dispositif de commande.

6. Unité de commande selon l'une quelconque des revendications précédentes, **caractérisée en ce que** l'unité de commande est reliée à un dispositif de calcul (26, 27, 28, 29) qui détecte une modification de la position de siège d'un utilisateur.

7. Procédé de commande pour un dispositif électronique, notamment dans un véhicule, des fonctions sélectionnables étant représentées de telle sorte sur un affichage qu'une première image d'affichage est représentée dans une première direction d'observation et qu'une deuxième image d'affichage différente de la première image d'affichage est représentée dans une deuxième direction d'observation et que les deux images d'affichage se différencient par au moins une fonction sélectionnable représentée, la sélection d'une des fonctions représentées sur une des deux images d'affichage se faisant par le biais de l'actionnement d'un dispositif de commande et du calcul d'une direction d'observation à partir de laquelle l'au moins un dispositif de commande est utilisé, **caractérisé en ce qu'**au moins une fonction représentée sur une première image d'affichage et une fonction différente représentée sur la deuxième image d'affichage sont représentées dans une zone se chevauchant au moins en partie d'une surface de l'affichage.
